Europäisches Patentamt

European Patent Office

Office européen des brevets

(11) Publication number : **0 526 094 A2**

# EUROPEAN PATENT APPLICATION

(21) Application number : 92306718.5

(22) Date of filing : 23.07.92

(51) Int. Cl.$^5$ : **G02F 1/137**, G02F 1/1337, G02F 1/1341

(30) Priority : 24.07.91 JP 206187/91

(43) Date of publication of application :
03.02.93 Bulletin 93/05

(84) Designated Contracting States :
AT BE CH DE DK ES FR GB GR IT LI LU NL PT
SE

(71) Applicant : **CANON KABUSHIKI KAISHA**
30-2, 3-chome, Shimomaruko, Ohta-ku
Tokyo (JP)

(72) Inventor : **Tsuboyama, Akira, c/o Canon
Kabushiki Kaisha**
30-2, 3-chome, Shimomaruko
Ohta-ku, Tokyo (JP)
Inventor : **Iwayama, Mitsuo, c/o Canon
Kabushiki Kaisha**
30-2, 3-chome, Shimomaruko
Ohta-ku, Tokyo (JP)

(74) Representative : **Beresford, Keith Denis Lewis
et al**
**BERESFORD & Co. 2-5 Warwick Court High
Holborn
London WC1R 5DJ (GB)**

(54) Liquid crystal device.

(57)    A chiral smectic liquid crystal device is consti-
tuted by forming a rectangular cell structure
including a pair of substrates and an injection
port in a side of the cell structure, the pair of
substrates having been provided with alignment
axes in substantially identical directions, and
filling the cell structure with a chiral smectic
liquid crystal through the injection port. The
alignment axes are provided, e.g., by rubbing so
as to provide a pretilt of liquid crystal molecules
in the vicinity of the liquid crystal molecules to
raise their heads in a direction which is on an
axis parallel to the side of the substrates with
the injection port or directed toward the injec-
tion port, whereby liquid crystal layer thickness
irregularity due to movement of liquid crystal
molecules along the cell extension is suppres-
sed.

F I G. I

## FIELD OF THE INVENTION AND RELATED ART

The present invention relates to a liquid crystal device for use in a liquid crystal display device, a liquid crystal shutter, etc., and more particularly to a ferroelectric liquid crystal device having improved durability.

Hitherto, there has been known a ferroelectric liquid crystal device (FLCD) comprising a pair of substrates having scanning electrodes and data electrodes respectively thereon constituting an electrode matrix, and a ferroelectric liquid crystal (FLC) sandwiched between the substrates. In such a ferroelectric liquid crystal device, electric signals are supplied to the respective electrodes so that a pixel formed at each intersection of the scanning electrodes and the data electrodes selectively transmits or intercepts light to function as a liquid crystal shutter. Such a liquid crystal device may be combined with a light source, a color filter, etc., to provide a display apparatus for displaying images and characters.

As a result of our study for producing a display apparatus using an FLC, we have found a serious difficulty in durability of the apparatus.

More specifically, when a liquid crystal device (panel) is driven under appropriate conditions for providing a desired picture or the panel continually for a relatively long period (e.g., for more the one hundred and several tens of hours), liquid crystal molecules move within the panel to result in a change in liquid crystal layer thickness leading to a inferior display quality and even cause a void lacking the liquid crystal within the panel or further continuation of the drive.

## SUMMARY OF THE INVENTION

An object of the present invention is to provide a ferroelectric liquid crystal device with an improved durability.

According to the present invention, there is provided a liquid crystal device, comprising: a pair of substrates forming a cell structure and having thereon scanning electrodes and data electrodes, respectively, so as to form an electrode matrix in combination, and a chiral smectic liquid crystal disposed between the substrates, wherein the liquid crystal has been injected through an injection port provided in a side of the substrates, and the pair of substrates are provided with alignment axes in substantially identical directions so as to provide a pretilt of liquid crystal molecules in the vicinity of the substrates causing the liquid crystal molecules to raise their leading ends in a direction which is on an axis parallel to the side of the substrates with the injection port or directed toward the injection port.

According to another aspect of the present invention, there is provided a liquid crystal apparatus, including:
(a) a liquid crystal panel comprising a pair of substrates forming a cell structure and having thereon scanning electrodes and data electrodes, respectively, so as to form an electrode matrix in combination, and a chiral smectic liquid crystal disposed between the substrates, wherein the liquid crystal has been injected through an injection port provided in a side of the substrates, and the pair of substrates are provided with alignment axes in substantially identical directions so as to provide a pretilt of liquid crystal molecules in the vicinity of the substrates causing the liquid crystal molecules to raise their leading ends in a direction which is on an axis parallel to the side of the substrates with the injection port or directed toward the injection port; and
(b) drive means for applying a scanning signal to the scanning electrodes and applying data signals to the data electrodes in synchronism with the scanning signal.

These and other objects, features and advantages of the present invention will become more apparent upon a consideration of the following description of the preferred embodiments of the present invention taken in conjunction with the accompanying drawings.

## BRIEF DESCRIPTION OF THE DRAWINGS

Figure 1 is a planar front view of a liquid crystal panel according to an embodiment of the invention.

Figure 2 is a schematic view for illustrating an appearance of a conventional liquid crystal panel for comparison after a driving durability test.

Figure 3 illustrates a set of driving waveforms used in evaluation of panels of Examples and Comparative Examples.

Figure 4 is a view for illustrating a relationship between a rubbing direction and a pretilt angle.

## DESCRIPTION OF THE PREFERRED EMBODIMENTS

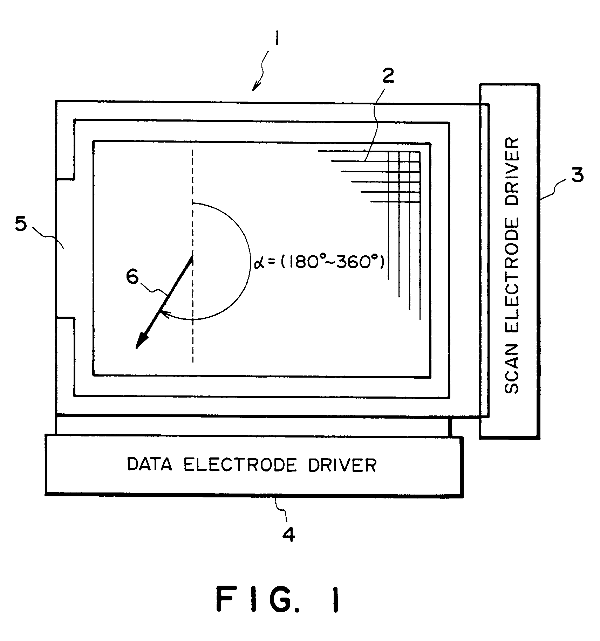

Figure 1 is a planar front view of a liquid crystal apparatus including a liquid crystal panel according to an embodiment of the present invention and drivers therefor. The apparatus includes a liquid crystal panel 1 having a display region 2 including a matrix of pixels each formed at an intersection of scanning electrodes and data electrodes, a driver 3 for the scanning electrodes, a driver 4 for the data electrodes, a liquid crystal injection port 5 for the panel 1, and a rubbing direction 6 (direction of liquid crystal molecules raising their heads (leading ends) from a substrate due to a pretilt in the vicinity of the substrate) provided to a pair of substrates constituting the panel 1. The rubbing direction 6 is selected to form an angle a with respect to an axis taken in parallel with a side of the panel (i.e., the substrates) in which the injection port 5 is (or has been) provided. The alignment directions (i.e., alignment axes) provided to the pair of substrates may be strictly identical or may cross each other at an intersection angle of 2 - 10 degrees.

In a specific experimental example (corresponding to Comparative Example 3 appearing hereinafter), a liquid crystal panel of the structure described above was prepared in the following manner.

A data electrode plate having 640 data electrodes thereon formed at a pitch of 200 μm and a scanning electrode plate having 400 scanning electrodes formed at a pitch of 200 μm, were respectively coated with a 15 Å-thick polyimide alignment film and rubbed in one direction. The data electrode plate and scanning electrode plate were superposed with each other with silica beads dispersed therebetween so as to form a gap of 1.3μm therebetween and applied to each other at their peripheries with an epoxy adhesive to leave an injection port 5 so that their rubbing directions substantially coincided with each other in a direction 6 forming an angle α (as defined above) of 90 degrees. The thus formed blank cell was evacuated to form a sufficient degree of vacuum therein by placing the cell in an atmosphere of $10^{-3}$ Torr for 1 hour. After the evacuation, the panel in the vacuum atmosphere was entirely heated to 95 °C so as to ensure the isotropic phase of a liquid crystal material to be injected therein. Then, a sufficient amount of the liquid crystal material was supplied to the vicinity of the injection port of the panel to cover the injection port. Then, the atmosphere surrounding the panel was restored to the atmospheric pressure to inject the liquid crystal material into the panel under pressure. When the inner space of the panel was sufficiently charged with the liquid crystal material, the heating was stopped, and the injection port of the panel restored to room temperature was sealed with an adhesive. The liquid crystal material used was an ester-pyrimidine type mixture liquid crystal showing the following phase transition temperature (°C):

$$\text{Crystal} \xrightarrow{\quad} \underset{-5}{\text{SmC}*} \xrightarrow{\quad} \underset{62}{\text{SmA}} \xrightarrow{\quad} \underset{75}{\text{Ch.}} \xrightarrow{\quad}_{82} \text{Iso.}$$

The liquid crystal also showed a spontaneous polarization of 5.8 nC/cm² at 25°C, and the resultant liquid crystal panel showed a response speed (causing a transmittance change of 10 - 90 % at 30 volts) of 110 μsec.

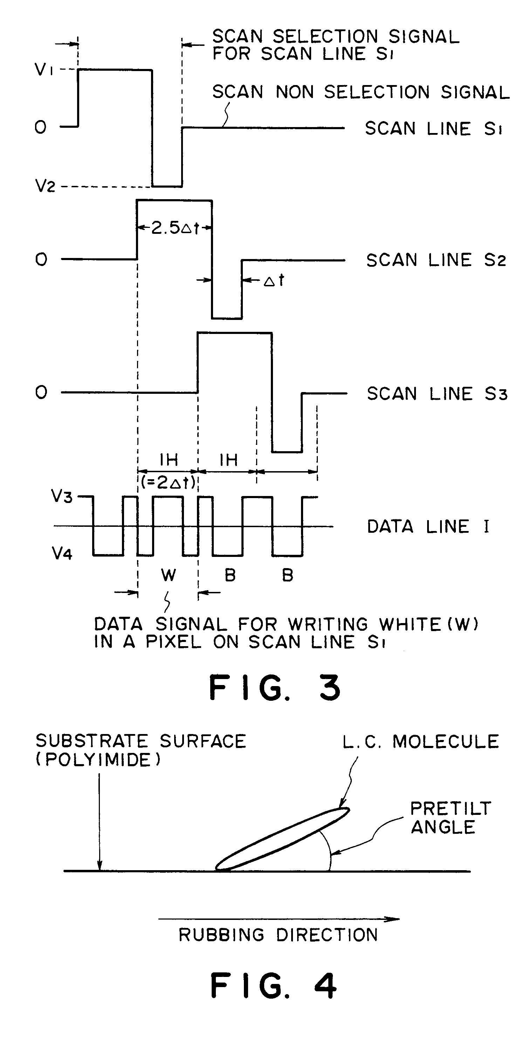

The liquid crystal panel thus prepared was subjected to a durability test at room temperature (= 25°C) by applying a set of driving waveforms shown in Figure 3 including a scanning selection signal comprising a positive pulse $V_1$ (amplitude = 20 volts, width = 2.5 Δt) and a negative pulse $V_2$ (amplitude = 20 volts, width = Δt) and data signals including a white-writing signal W ($V_4$ (-10 volts, 0.5 Δt) - $V_3$ (10 volts, Δt) - $V_4$ (0.5 Δt) and a black-writing signal B ($V_3$ (0.5 Δt) - $V_4$ (Δt) - $V_3$ (0.5 Δt)), wherein Δt was 110 μsec and pixels on a scanning electrode were rewritten in a period 1H of 2Δt.

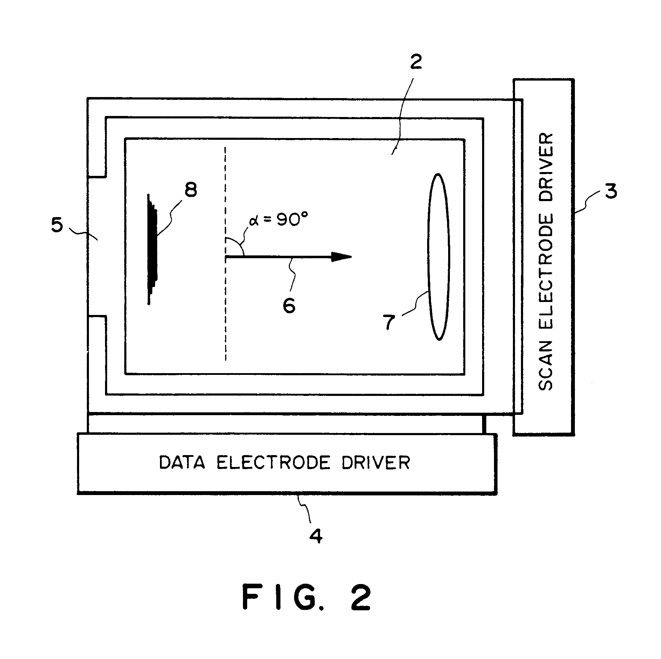

As a result, when the drive was continued for more than 250 hours, there were observed an increase in liquid crystal layer thickness at a part 7 and a liquid crystal void at a port 8 in the display region 2 of the panel as shown in Figure 2. Thus, as a result of continuation of the drive, the liquid crystal molecules moved in the rubbing direction 6 to cause the increase in the liquid crystal layer thickness at a part 7 on the right side (to which the rubbing direction was directed) and the decrease in the liquid crystal layer thickness or the occurrence of the liquid crystal void at a part 8 in the neighborhood of the injection port 5.

Examples 1 - 7 and Comparative Examples 1 - 5

Based on the above observation, a series of further experiments were conducted while taking note of a relationship between the rubbing direction and occurrence of the defects. More specifically, twelve liquid crystal panels were prepared in the above-described manner except that different rubbing angles α ranging from 0 degree to 330 degrees were used. The respective panels were then subjected to the same durability test as described above.

As a result, in the respective panels, similar defects as above (i.e., occurrence of thickness increase and liquid crystal void) were observed due to movement of the liquid crystal molecules in the respective rubbing directions. However, clear differences were observed in readiness of the occurrence of such defects, in terms of the length of time in which such defects occurred. The results are summarized the following Table 1.

## Table 1

| Ex. No. | Angle α of rubbing direction (degrees) | Defect occurrence time (hours) | | Remarks | |
|---|---|---|---|---|---|
| | | L.C. layer thickening* | L.C. void | | |
| 1 | 0 | 1000 | 1300 | Ex. 1 | |
| 2 | 30 | 150 | 250 | Comp.Ex. | 1 |
| 3 | 60 | 200 | 200 | " | 2 |
| 4 | 90 | 150 | 250 | " | 3 |
| 5 | 120 | 120 | 180 | " | 4 |
| 6 | 150 | 200 | 280 | " | 5 |
| 7 | 180 | 1000 | 1500 | Ex. 2 | |
| 8 | 210 | 1000 | 1600 | " | 3 |
| 9 | 240 | 1200 | 1200 | " | 4 |
| 10 | 270 | 1000 | 1500 | " | 5 |
| 11 | 300 | 1000 | 1500 | " | 6 |
| 12 | 330 | 1100 | 1200 | " | 7 |

\* A length of time in which a liquid crystal layer thickening by 0.1 μm or more occurred.

As is clear from the above Table 1, good results (defect occurrence time of 1000 hours or longer with respect to the liquid crystal layer thickening or liquid crystal void) were obtained in the cases (Examples 1 - 7) where the rubbing angles α were in the range of 180 degrees $\leq \alpha \leq$ 360 degrees, i.e., where the liquid crystal molecules were caused to move in the rubbing directions toward the liquid crystal injection port. In contrast thereto, in the cases (Comparative Examples 1 - 5) where the rubbing angle α were in the range of 0 degree < α < 180 degrees, i.e., where the liquid crystal molecules were caused to move in the rubbing directions toward the side opposite to the injection port of the panel, the defects of liquid crystal layer thickening and liquid crystal void occurred in remarkably shorter periods of 120 - 280 hours.

As a consideration of the above pheromena, it is clear that FLC molecules were caused to move under the action of a torque caused by driving voltages, and it is considered unlikely in principle that the change in rubbing direction caused a change in nature of the torque acting on the liquid crystal molecules.

In contrast thereto, it is more natural to consider that a certain pressure exerted into a liquid crystal cell causes a distribution of cell thickness change. More specifically, in the case where liquid crystal molecules move in a direction leaving away from the injection port, a cell thickness change easily occurs but, in the case

4

of liquid crystal molecules moving toward the injection port, the cell thickness change or the liquid crystal void does not easily occur. From the experimental results, it is assumed that there has resulted in some difference in degree of packing between the liquid crystal present in the vicinity of the injection port and the liquid crystal at the deep interior of the cell attributable to the liquid crystal injection step. While the mechanism has not been fully clarified, the results in the above Table 1 may be attributable to such a difference in packing density of the liquid crystal between the vicinity of the injection port and the deep interior of the cell.

Figure 4 illustrates a relationship between a rubbing direction and a pretilt angle of liquid crystal molecules in the vicinity of the substrate surface caused by the rubbing direction. This relationship has been confirmed by X-ray diffraction analysis.

As shown in Figure 4, a liquid crystal molecule raises its head (leading end) away from a substrate surface in a direction in which the substrate has been rubbed. Accordingly, the liquid crystal molecules tend to move in the direction of raising their leading ends due to a pretilt when subjected to a continuous drive. This has been also confirmed in the case of oblique vapor deposition as an alignment means for providing a pretilt instead of the rubbing as shown in the following Examples and Comparative Examples.

Examples 8 - 9 and Comparative Examples 6 - 7

Four liquid crystal panels were prepared in the same manner as in Examples 1 - 7 except that the number of pixels was changed to 100x100, and each pair of substrates were provided with SiO oblique vapor-deposition films formed by oblique vapor deposition at an angle of 80 degrees in directions which varied but were identical (parallel) to each other with respect to the pair of substrates.

The four liquid crystal panels prepared in different oblique vapor deposition directions (i.e., directions of growth of cylindrical SiO column deposited, causing pretilts giving identical directions of liquid crystal molecule head-up, thus corresponding to the rubbing direction) were subjected to the same durability test as in Examples 1 - 7 to observe the occurrence of the cell thickening defect and liquid crystal void defect. The results are shown in the following Table 2.

Table 2

| Ex. No. | Angle α of oblique deposition direction (degrees) | Defect occurrence time (hours) | | Remarks | |
|---|---|---|---|---|---|
| | | L.C. layer thickening* | L.C. void | | |
| 13 | 45 | 150 | 400 | Comp.Ex. | 6 |
| 14 | 135 | 200 | 300 | " | 7 |
| 15 | 225 | 800 | Not occurred | Ex. | 8 |
| 16 | 315 | 900 | Not occurred | Ex. | 9 |

\* Thickening by 0.1 μm or more

Also from the above results, it is understood that good results were obtained in the cases (Examples 8 - 9) where the oblique vapor deposition direction angle α were between 180 degrees and 360 degrees, i.e., where the liquid crystal molecules were provided with a pre-tilt causing their molecule head-up in a direction toward the injection port.

## Claims

1. A liquid crystal device, comprising: a pair of substrates forming a cell structure and having thereon scanning electrodes and data electrodes, respectively, so as to form an electrode matrix in combination, and a chiral smectic liquid crystal disposed between the substrates, wherein the liquid crystal has been injected through an injection port provided in a side of the substrates, and the pair of substrates are provided with alignment axes in substantially identical directions so as to provide a pretilt of liquid crystal molecules in the vicinity of the substrates causing the liquid crystal molecules to raise their leading ends in a direction which is on an axis parallel to the side of the substrates with the injection port or directed toward the injection port.

2. A liquid crystal device according to Claim 1, wherein said aligned nt axes have been provided by rubbing.

3. A liquid crystal device according to Claim 1, wherein said alignment axes have been provided by oblique vapor deposition.

4. A liquid crystal device, comprising: a pair of substrates forming a cell structure, and a chiral smectic liquid crystal disposed between the substrates, wherein the liquid crystal has been injected through an injection port provided in a side of the substrates, and the pair of substrates are provided with alignment axes in substantially identical directions so as to provide a pretilt of liquid crystal molecules in the vicinity of the substrates causing the liquid crystal molecules to raise their leading ends in a direction which is on an axis parallel to the side of the substrates with the injection port or directed toward the injection port.

5. A liquid crystal device according to Claim 4, wherein the alignment axes provided to the pair of substrates cross each other at a crossing angle of 2 -10 degrees.

6. A liquid crystal device according to Claim 4, wherein said alignment axes have been provided by rubbing.

7. A liquid crystal apparatus, including:
   (a) a liquid crystal panel comprising a pair of substrates forming a cell structure and having thereon scanning electrodes and data electrodes, respectively, so as to form an electrode matrix in combination, and a chiral smectic liquid crystal disposed between the substrates, wherein the liquid crystal has been injected through an injection port provided in a side of the substrates, and the pair of substrates are provided with alignment axes in substantially identical directions so as to provide a pretilt of liquid crystal molecules in the vicinity of the substrates causing the liquid crystal molecules to raise their leading ends in a direction which is on an axis parallel to the side of the substrates with the injection port or directed toward the injection port; and
   (b) drive means for applying a scanning signal to the scanning electrodes and applying data signals to the data electrodes in synchronism with the scanning signal.

8. An apparatus according to Claim 7, wherein the alignment axes provided to the pair of substrates cross each other at a crossing angle of 2 - 10 degrees.

9. An apparatus according to Claim 7, wherein the scanning signal includes a scanning nonselection signal applied to non-selected scanning electrodes and a scanning selection signal applied to a selected scanning electrode, the scanning selection signal comprising a former pulse of one polarity and a latter pulse of the other polarity respectively with respect the voltage level of the scanning nonselection signal, and the drive means includes means for successively applying scanning selection signals including successive two scanning selection signals of which the former pulse of one polarity of a preceding scanning selection signal overlaps in time with the latter pulse of the other polarity of a subsequent scanning selection signal.

10. An apparatus according to Claim 9, wherein the former pulse of one polarity has a larger pulse width than the latter pulse of the other polarity.

11. An apparatus according to Claim 7, wherein the alignment axes have been provided by rubbing.

12. A liquid crystal cell comprising a pair of facing electrode coated plates and a liquid crystal material sandwiched therebetween, an injection port being located in one side of said cell, characterised in that said plates have respective alignment directions aligned within 10° of each other and such as to impart a pretilt of the molecules of the liquid crystal material in a direction which is either parallel to said one side or is directed toward said injection port.

$\alpha = (180° \sim 360°)$

SCAN ELECTRODE DRIVER

DATA ELECTRODE DRIVER

FIG. I

FIG. 2

SCAN SELECTION SIGNAL
FOR SCAN LINE S₁

SCAN NON SELECTION SIGNAL

V₁

O ⎯⎯⎯⎯⎯⎯⎯ SCAN LINE S₁

V₂

2.5Δt

O ⎯⎯⎯⎯⎯⎯⎯ SCAN LINE S₂

Δt

O ⎯⎯⎯⎯⎯⎯⎯ SCAN LINE S₃

IH    IH
(=2Δt)

V₃

⎯⎯⎯⎯⎯⎯⎯ DATA LINE I

V₄

W    B    B

DATA SIGNAL FOR WRITING WHITE (W)
IN A PIXEL ON SCAN LINE S₁

# FIG. 3

SUBSTRATE SURFACE
(POLYIMIDE)

L.C. MOLECULE

PRETILT
ANGLE

RUBBING DIRECTION

# FIG. 4